# EUROPÄISCHE PATENTSCHRIFT

(11) **EP 1 138 968 B1**
(45) Veröffentlichungstag und Bekanntmachung des Hinweises auf die Patenterteilung: **31.08.2005**
(21) Anmeldenummer: 01107238.6
(22) Anmeldetag: 23.03.2001
(51) Int. Cl.: F16D 3/38, F16C 33/80

(54) **Labyrinthdichtung für eine Gelenkkreuzwelle**
Labyrinth seal for a universal joint
Joint d'étanchéité à labyrinthe pour joint universel

(30) Priorität: 29.03.2000 DE 10015571
(43) Veröffentlichungstag der Anmeldung: 04.10.2001
(73) Patentinhaber: G. ELBE & SOHN GmbH & Co., D-74321 Bietigheim-Bissingen (DE)
(72) Erfinder: Kopp, Markus, 71292 Friolzheim (DE)
(74) Vertreter: Sartorius, Peter

(56) Entgegenhaltungen:
- DE-A- 4 128 179
- DE-C- 19 637 553
- DE-U- 8 416 023
- US-A- 4 377 312
- US-A- 4 440 401
- US-A- 4 903 971
- US-A- 5 407 387
- US-A- 5 626 520

## Beschreibung

Die Erfindung bezieht sich auf eine Abdichtung für einen in einer Lagerbuchse aufgenommenen Gelenkkreuzzapfen für eine Gelenkkreuzwelle mit einem äußeren und einem inneren, ringförmigen, in die Lagerbuchse einsetzbaren, eine gegenseitige Verstellung zulassenden Dichtungskörper, die miteinander in Wirkverbindung stehen.

Es ist bereits eine Dichtungsanordnung (DE 44 08 831 A1) für eine Lagerung eines Zapfens in einer Lagerbuchse für wälzgelagerte Kreuzgelenke bekannt, die aus einem mit einer Armierung versehenen Radialwellendichtring besteht, der drehfest in eine Bohrung der Lagerbuchse eingesetzt ist und mit einer Dichtlippe an den Zapfen anliegt. Ferner weist die Dichtungsanordnung einen weiteren armierten Dichtring auf, der im Bereich eines offenen Endes der Lagerbuchse drehfest an einer Schulter des Zapfens anliegend angeordnet und mit einer zur Lagerbuchse gerichteten Dichtlippe versehen ist. Die Dichtungsanordnung weist als weiteres Bauteil eine formschlüssig an einer Außenwand der Lagerbuchse gehaltene Dichtkappe auf, die mit einer Armierung des Dichtrings einen Labyrinthspalt bildet. Hierbei ist die Vorspannung der Dichtlippen, sofern sie auf einer rein zylindrischen Stufe anliegen, nur durch die Durchmessertoleranzen der betreffenden Bauteile des Gelenkkreuzsatzes beeinflußbar und kann damit eingehalten werden. Da aber aus Fertigungsgründen die Übergänge an den einzelnen Stufensprüngen abgerundet sind, werden die zylindrischen Dichtflächen in axialer Richtung verkürzt und die Möglichkeit, mehrere solche Dichtlippen hintereinander anzuordnen, um dadurch die Dichtwirkung zu verbessern, weitgehendst eingeschränkt.

Dichtungssysteme, bei denen die Hauptabdichtung auf einem konischen Übergang zwischen der zylindrischen Wälzkörperfläche des Gelenkkreuzzapfens und dem zentralen Gelenkkreuzkörper stattfindet, sind aus der DE 196 37 553 C1 bekannt. Dabei kann aber durch eine mögliche Addition bzw. Subtraktion von fertigungsbedingten Längen und Durchmessertoleranzen der betreffenden Bauteile des Gelenkkreuzsatzes die nötige Vorspannung nur erschwert eingehalten werden. Dichtungssysteme dieser Art sind aufgrund der Relativbewegung zum jeweiligen Dichtungselement der Reibung ausgesetzt und besitzen eine Zusatzdichtung, die vor der Hauptdichtung angeordnet ist und diese zum einen vor direktem Kontakt mit Fremdstoffen schützt und zum anderen die Dichtwirkung erhöhen soll. Diese Zusatzdichtung ist auf dem Gelenkkreuzzapfen angebracht. Ihre Dichtlippen sind so angeordnet, dass die Abdichtung auf der Lagerbuchse und auf der Hauptdichtung stattfindet.

Ein anderes Problem beim Abdichten eines Gelenkkreuzsatzes stellt die Kontur des Gelenkkreuzes dar, denn aus Fertigungsgründen ist der Übergang zwischen der zylindrischen Wälzkörperlauffläche des Gelenkkreuzzapfens und dem zentralen Gelenkkreuzkörper konisch verrundet oder stufenförmig mit jeweils einem Konus oder Radius bzw. Stufensprung ausgebildet. Dieser Übergang zwischen Gelenkkreuzzapfen und zentralem Gelenkkreuzkörper dient als Dichtfläche der Hauptdichtung, an der eine oder mehrere Dichtlippen des Dichtungssystems, das im Regelfall ortsfest mit der Gelenkkreuzbuchse verbunden ist, mit einer bestimmten Vorspannung anliegen. Diese Vorspannung muß aus funktionstechnischen Gründen gewährleistet sein, da durch eine zu geringe Vorspannung Fremdstoffe in die Lagerung eindringen können oder durch eine zu große Vorspannung ein erhöhter Reibungsverschleiß stattfindet und somit in beiden Fällen ein frühzeitiger Lagerausfall hervorgerufen wird.

Der Erfindung liegt die Aufgabe zugrunde, die Abdichtung für einen in einer Lagerbuchse aufgenommenen Gelenkkreuzzapfen derart auszubilden und anzuordnen, dass eine weitgehend dauerhafte Abdichtung und somit eine Verbesserung der Lebensdauer gewährleistet wird.

Gelöst wird die Aufgabe erfindungsgemäß dadurch, dass beide in radialer Richtung gegenüberliegende Dichtungskörper labyrinthartig angeordnete, formschlüssig ineinandergreifende Dichtungslamellen aufweisen, die sich in etwa in Richtung oder parallel zu einer rechtwinklig zur Mittelachse des Gelenkkreuzzapfens angeordneten Querebene erstrecken und eine

Labyrinthdichtung bilden und zumindest einer der Dichtungskörper ein Umhüllungsteil aufweist, das den anderen Dichtungskörper und/oder die Lagerbuchse zumindest teilweise überlappt.

Durch die vorteilhafte Ausbildung und Anordnung der beiden Dichtungskörper mit den in Eingriff stehenden, formschlüssigen Dichtungselementen und dem zugehörigen Umhüllungsteil wird auf kostengünstige Weise eine einfache, jedoch sehr wirkungsvolle Dichtungsvorrichtung geschaffen, mit der eine dauerhafte Abdichtung und somit eine wesentliche Verbesserung der Lebensdauer gewährleistet wird.

Vorteilhaft ist es hierzu, dass der äußere Dichtungskörper mit der Lagerbuchse und der innere Dichtungskörper mit dem Gelenkkreuzzapfen jeweils mit Hilfe einer Presspassung verbunden sind. Dadurch wird erreicht, dass die Abdichtung zwischen dem jeweiligen Dichtungskörper und dem Gelenlczapfen bzw. der Lagerbuche statisch erfolgt, d. h. der Dichtungskörpers rotiert nicht relativ zu dem Gelenkzapfen bzw. zu der Lagerbuche. Eine dynamische Dichtung, wie sie der Stand der Technik beschreibt, ist zwar in weiten Grenzen wartungsfrei, einfacher und billiger, aber auf Dauer nicht sicher genug, um hohen Anforderungsansprüchen an Sicherheit gerecht zu werden. Bei mangelnde Schmierung kann es zu einer Überbelastung des Kreuzgelenks und zum Bruch kommen.

Eine zusätzliche Möglichkeit ist gemäß einer Weiterbildung, dass die Dichtungskörper ein oder mehrere Abstützelemente aufweisen, wobei zumindest ein Abstützelement als Dichtlippen ausgebildet ist und auf dem Konusteil oder im Bereich eines Konusübergangs auf dem Gelenkkreuzzapfen mit Vorspannung abstützbar ist. Hierdurch wird erreicht, dass die Abdichtung nicht mehr direkt auf dem Gelenkkreuzzapfen stattfindet, sondern durch die ineinander eingreifenden, lamellenförmigen bzw. labyrinthförmig ausgebildeten Dichtungselemente, die miteinander in Eingriff bzw. in Wirkverbindung stehen. Vorteilhafterweise kann dabei der äußere Dichtungskörper mit der Lagerbuchse und der innere Dich-tungskörper mit dem Gelenkkreuz über eine Presspassung verbunden sein, so dass ein Eindringen von Fremdstoffen bzw. ein Schmiermittelverlust an den Fügestellen vermieden wird. Zur Herstellung dieses Dichtungssystems, das aus dem äußeren Dichtungskörper und dem inneren Dichtungskörper besteht, die beide ringförmig ausgebildet sind, kann der äußere Dichtungskörper spanend oder spanlos hergestellt und anschließend in eine Spritzgussform eingelegt werden, an der zusätzlich die Kontur des inneren Dichtungskörpers ausgespart ist. Hierdurch kann der innere Dichtungskörper eingespritzt werden, so daß er beim Erkaltungsvorgang etwas schrumpft. Dadurch entsteht ein Labyrinthspalt zwischen den beiden Dichtungskörpern, der sicherstellt, daß sich Innen- und Außenringe gegeneinander drehen lassen können, ohne daß große Reibungsverluste auftreten. Vor dem Einspritzen des inneren Dichtungskörpers wird durch Aufbringen von Trennmittel auf den beiden Dichtungskörpern verhindert, daß diese zusammenhaften. Dabei ist es vorteilhaft, daß die einander gegenüberliegenden Flächen keine Unebenheiten aufweisen, wodurch ebenfalls Reibungsverluste reduziert werden können.

Ferner ist es vorteilhaft, daß die beiden Abstützelemente mit Abstand zueinander angeordnet sind und das zweite Abstützelement auf einer an den Konusübergang anschließenden, geneigt verlaufenden Konusfläche abstützbar ist. Durch die vorteilhafte Verwendung der beiden mit Abstand zueinander angeordneten Abstützelemente lassen sich diese ohne weiteres im Übergangsbereich zwischen dem zylinderförmigen Teil des Gelenkkreuzzapfens und dem Konusübergang auf der Oberfläche des Gelenkkreuzzapfens anbringen und dadurch auch eine einwandfreie Dichtung erzielen, insbesondere dann, wenn diese mit Vorspannung gegen die Oberfläche des Gelenkkreuzzapfens gepreßt werden.

Vorteilhaft ist es auch, daß zwischen den beiden Abstützelementen eine zur Oberfläche des Gelenkkreuzzapfens gerichtete Kammer bzw. Aussparung gebildet ist. Durch die unterschiedlich große Anzahl der Dichtungslamellen bzw. der Abstützelemente, die als Dichtungslamellen fungieren, kann die Hauptdichtung unterschiedlichen Konturen und Verhältnissen an der Gelenkkreuzwelle bzw. dem Gelenkkreuzzapfen angepaßt werden. Ferner ist es ohne weiteres möglich, die Höhe der Abstützelemente bzw. der lamellenförmigen Dichtungselemente zu vergrößern oder zu verkleinern, so dass die Querschnittshöhe des Hauptdichtungsbereichs ebenfalls vergrößert bzw. vermindert werden kann. Durch die Verminderung der Gesamtmasse der Dichtungselemente erhält man einen Bauraumgewinn und kann somit ohne weiteres die Dichtungselemente auf einer Stufe eines stufenförmig ausgebildeten Gelenkkreuzzapfens plazieren und dadurch den für die Wälzkörperlagerung zur Verfügung stehenden Bauraum vergrößern.

Gemäß einer bevorzugten Ausführungsform der erfindungsgemäßen Lösung ist schließlich vorgesehen, dass das auf dem inneren Dichtungskörper angeordnete Umhüllungsteil einen koaxial zu einer Mittelachse verlaufenden Ringraum aufweist, der zur Aufnahme eines an der Lagerbuchse angeordneten, ringförmigen Ansatzes dient.

Von besonderer Bedeutung ist für die vorliegende Erfindung, dass der Ansatz eine im Querschnitt rechteckförmige Aussparung aufweist, in die der äußere Teil des Umhüllungsteils einbringbar ist und der Ansatz und die Aussparung mit dem Ringraum eine Labyrinthdichtung bilden.

Dabei weist die Lagerbuchse einen Boden mit einer innenliegenden Stirnfläche auf und zwischen dieser Stirnfläche und den beiden innenliegenden Stirnflächen der Dichtungskörper sind zur Aufnahme des Gelenkkreuzzapfens Wälzkörper vorgesehen.

Durch das vorteilhaft beschriebene Dichtungssystem erhält man eine zusätzliche Abdichtung durch eine am Innenring des Dichtungskörpers angeformte Dichtlippe in Verbindung mit dem Gelenkkreuzkonus. Durch den Presssitz des inneren Dichtungskörpers auf dem Gelenkkreuzzapfen können Fremdkörper nicht in den Innenraum der Lagerbuchse eindringen. Durch den Überlappungs- bzw. Umhüllungsteil, der den anderen Dichtungskörper und/oder die Lagerbuchse zumindest teilweise umgibt, entsteht eine zusätzliche Abdichtung, die einerseits die labyrinthförmig ausgebildete Hauptdichtung und andererseits den Pressverband zwischen Außenring und Lagerbuchse vor Fremdstoffen in vorteilhafter Weise schützt. Durch die Aussparung zwischen den beiden Abstütz- oder Dichtungselementen kann der Anpressdruck in diesem Bereich optimal gesteuert werden. Ferner kann in diese Aussparung ein aus Elastomere bestehender Ring eingelegt und somit eine zusätzliche Dichtwirkung erreicht werden.

Im Zusammenhang mit der erfindungsgemäßen Ausbildung und Anordnung ist es von Vorteil, dass mit Bezug auf eine Querebene in etwa parallel verlaufende Stirnseiten des Ansatzes und der Aussparung mit ebenfalls auf einer Querebene liegenden Stirnseiten des Umhüllungsteils des Ringraums je einen Ringspalt bilden. Durch die vorteilhafte Materialauswahl und Dimensionierung, die beide direkten Einfluß auf die einzelnen Pressverbände haben, kann die Größe des Labyrinthspalts gesteuert und dadurch der Vorteil erreicht werden, dass die hauptsächliche Dichtwirkung nur von den Durchmessertoleranzen beeinflußt wird. Sowohl der äußere als auch der innere Dichtungskörper werden bei der Montage auf ihre jeweiligen Bauteile aufgepresst und im elastischen Bereich verformt. Hierbei kann sich der Labyrinthspalt des Dichtungssystems wieder verkleinern. Durch die vorteilhafte Auswahl dieser Einflußgrößen kann die Reibung zwischen dem inneren und dem äußeren Dichtungskörper auf ein Minimum reduziert werden, und man erhält dadurch eine weitgehend verschleißfreie Abdichtung.

Vorteilhaft ist es ferner, dass das Umhüllungsteil und die beiden Abstützelemente den einteiligen Dichtungskörper bilden, der aus einem elastomeren Werkstoff besteht und zumindest auf den Gelenkkreuzzapfen und/oder auf ein Konusteil aufgepresst ist.

Hierzu ist ein Verfahren zur Herstellung einer Abdichtung von Vorteil, bei dem der äußere Dichtungskörper mit radial nach innen gerichteten Dichtungslamellen spanend oder spanlos hergestellt und anschließend in eine Spritzgussform eingelegt wird an der zusätzlich die Kontur des inneren Dichtungskörpers ausgespart ist, vor dem Einspritzen des inneren Dichtungskörpers ein Trennmittel auf den äußeren Dichtungskörper aufgebracht wird, welches das Zusammenhaften der beiden Dichtungskörper verhindert, danach der innere Dichtungskörper in die Kontur und zwischen die Dichtungslamellen des äußeren Dichtungskörpers eingespritzt wird und der innere Dichtungskörper beim Erkaltungsvorgang etwas schrumpft, wodurch ein Labyrinthspalt zwischen den beiden Dichtungskörpern gebildet wird.

Weitere Vorteile und Einzelheiten der Erfindung sind in den Patentansprüchen und in der Beschreibung erläutert und in den Figuren dargestellt. Es zeigt:
- Figur 1: eine Abdichtung für einen in einer Lagerbuchse aufgenommenen Gelenkkreuzzapfen für eine Gelenkkreuzwelle mit einem äußeren und einem inneren, ringförmigen, in die Lagerbuchse einsetzbaren Dichtungskörper,
- Figur 2: eine schematische Darstellung eines Kreuzgelenks, teilweise im Schnitt,
- Figur 3: eine vergrößerte Darstellung der beiden in Figur 1 dargestellten Dichtungskörper mit dem Konusbereich des Gelenkkreuzzapfens.

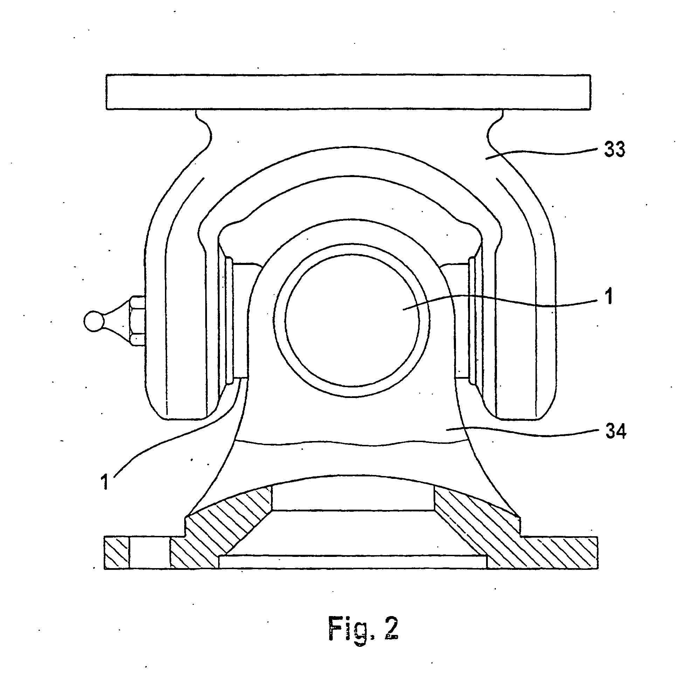

In der Zeichnung ist in Fig. 2 ein Kreuzgelenk schematisch dargestellt. Gelenke und Gelenkwellen sowie die meisten Ausgleichskupplungen dienen zum Ausgleich geringer Wellenverlagerungen. Am meisten verwendet man das Kreuzgelenk (Kardangelenk). In Fig. 2 sind zwei Gelenkgabeln 33 und 34 über Kreuzgelenkzapfen miteinander verbunden. Die Gelenkgabeln 33, 34 können beispielsweise im Gelenk geschmiedet sein. Das Zapfenkreuz besteht normalerweise aus hochwertigem Einsatzstahl und ist in Wälzlagern aufgenommen. Vorteilhaft ist es, wenn man lange Zapfen in Bezug auf genaue Herstellung der Gleitflächen und Reibungsverluste verwendet. Derartige Gelenkwellen können bei Achsantrieben von Kraftfahrzeugen oder Schienenfahrzeugen eingesetzt werden. Für Kreuzgelenke im Kraftfahrzeugbau wird als optimaler Beugungswinkel fünf bis sieben Grad angegeben, insbesondere mit Rücksicht auf Erwärmung und Wirkungsgrad. Bei zu kleinen Auslenkwinkeln besteht die Gefahr, daß sich Lagernadeln und Zapfen wegen zu geringer Wälzbewegung abplatten.

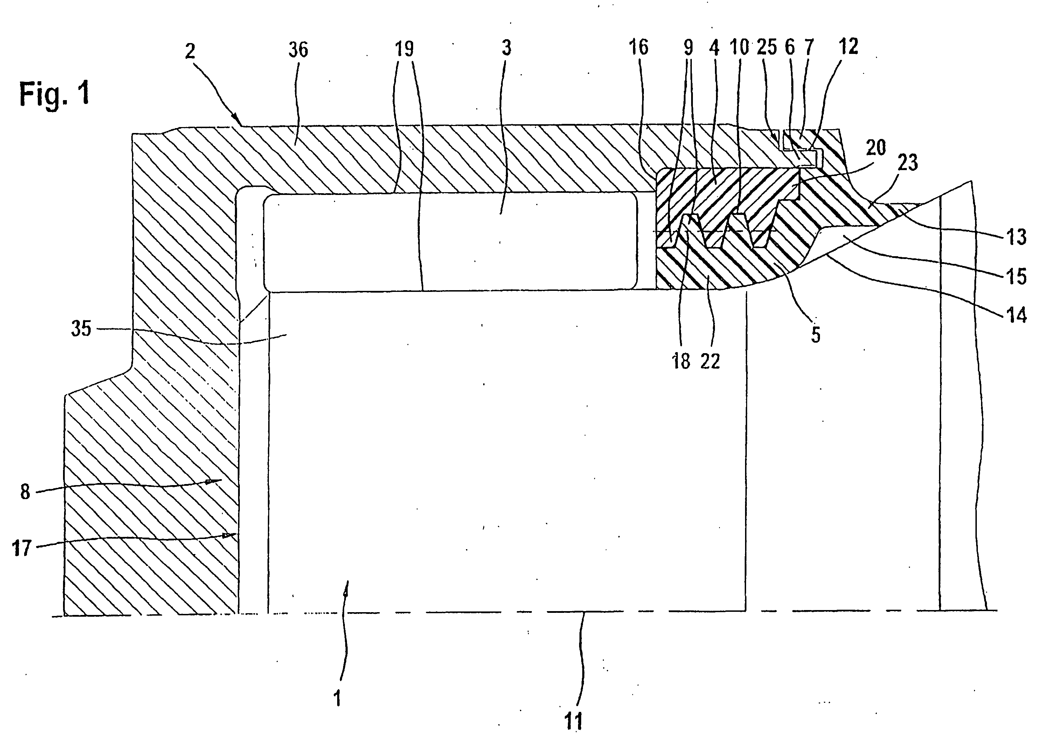

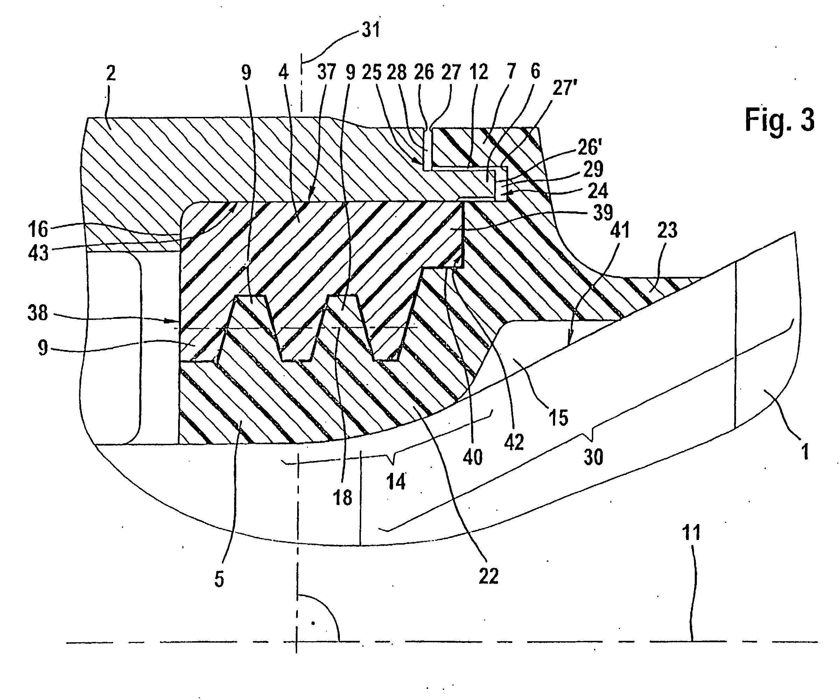

Ein besonderes Problem ist die einwandfreie Abdichtung des Gelenkkreuzzapfens, der in Fig. 1 und 3 schematisch wiedergegeben ist. Ein Gelenkkreuzzapfen besteht aus einem zylinderförmigen Zapfenteil 35, das mittels eines Wälzkörpers 3 in einer Lagerbuchse 2 drehbar angeordnet ist.

Die Lagerbuchse 2 besteht aus einem zylinderförmigen Gehäuseteil 36 mit einem Boden 8, der eine plane Stirnfläche 17 aufweist. Am stirnseitigen Ende der Lagerbuchse 2 befindet sich eine ringförmige Aussparung zur Aufnahme von mindestens einem ersten ringförmig ausgebildeten, äußeren Dichtungskörper 4, der mit einem zweiten innenliegenden, ebenfalls ringförmig ausgebildeten Dichtungskörper 5 über formschlüssig ausgebildete Dichtungselemente bzw. Dichtungslamellen 9 wirkungsmäßig verbunden ist. Die beiden Dichtungskörper 4 und 5 bilden im wesentlichen das Hauptabdichtungssystem zwischen dem Außen- und dem Innenbereich der Lagerbuchse 2.

Zwischen der Stirnfläche 17 und zwei ebenfalls gegenüberliegenden Stirnflächen 38 der Dichtungskörper 4, 5 befindet sich der bereits erwähnte Wälzkörper 3 zur Lagerung des Gelenkzapfenteils 35 des Gelenkkreuzzapfens 1. Dieser Innenraum wird durch die beiden Dichtungskörper 4 und 5 auf vorteilhafte Weise unter Vermeidung großer Reibungskrafte gegenüber Fremdkörpern abgedichtet.

In einer ringförmigen Aussparung 37, die durch eine Schulter 16 begrenzt wird, sitzt der bereits erwähnte erste Dichtungskörper 4, der in die ringförmige Aussparung 37 eingepreßt werden kann, um eine gute Reibschlußverbindung zwischen der Innenoberfläche des Dichtungskörpers 4 und der Innenoberfläche der Aussparung sicherzustellen.

Zu dem ersten äußeren, ringförmigen Dichtungskörper 4 gehört auch der zweite innere, ringförmig ausgebildete Dichtungskörper 5. Beide Dichtungskörper 4 und 5 weisen zahlreiche nebeneinander angeordnete, labyrinthartig ausgebildete Dichtungselemente bzw. Dichtungslamellen 9 auf, die im Querschnitt gemäß Fig. 3 trapezförmig ausgebildet sein können.

Die Dichtungslamellen 9 sind derart ausgebildet und angeordnet, daß zwischen den gegenüberliegenden Dichtungsflächen ein geringfügiger Spalt verbleibt, so daß zwischen den beiden Dichtungskörpern 4 und 5 eine Drehbewegung möglich ist. Im Ausführungsbeispiel gemäß Fig. 3 weist der äußere Dichtungskörper drei nebeneinanderliegende Dichtungslamellen 9 auf, an die sich ein zylinderförmiger Ansatz 39 anschließt, der in eine entsprechende im inneren Dichtungskörper 5 vorgesehene Ausdrehung 40 paßgenau eingesetzt ist. Auf diese Weise kann die innenliegende Stirnfläche der Ausdrehung 40 gegen die Stirnfläche des Dichtungskörpers 4 drücken und somit den Dichtungskörper 4 wiederum gegen die Schulter 16 der Lagerbuchse 2 pressen. Hierdurch wird sichergestellt, daß die beiden Dichtungskörper 4, 5 auch bei einem Preßverbund nicht weiter in den Innenraum der Lagerbuchse 2 wandern und somit auch die Lage des Gelenkkreuzzapfens 1 gegen eine axiale Verschiebung zusätzlich sichern können. Der zweite Dichtungskörper 5 ist mit Bezug auf seine Dichtungslamelle 9 spiegelbildlich zu dem ersten Dichtungskörper 4 ausgebildet, wobei die beiden gegenüberliegenden Dichtungslamellen 9 gemäß Fig. 1 in einem ständigen Eingriff stehen.

Der Dichtungskörper 5 weist gemäß Fig. 1 wenigstens zwei mit Abstand zueinander angeordnete Abstützelemente 22 und 23 auf, wobei das eine Abstützelement 22 in einem Bereich 14 des Kcnusübergangs vorgesehen ist. Der Bereich 14 liegt gemäß Fig. 3 zwischen dem rechten Ende des zylindrischen Gelenkzapfenteils 35 und einem sich daran anschließenden, sich erweiternden Konusteil 30. Der Übergangsbereich 14 hat einen kurvenförmigen Verlauf. Ein Teil des Abstützelements 22, 23 sitzt auf dem zylindrischen Teil und ein Teil des Abstützelements auf dem sich erweiternden Teil des Gelenkkreuzzapfens 1 auf. An das Abstützelement 22 schließt sich in Richtung einer Oberfläche 41 des Konusteils 30 eine Kammer bzw. Aussparung 15 und daran das zweite Abstützelement 23 an.

Die beiden Dichtungskörper 4, 5 können aus einem elastomeren Material, aus Thermoplasten wie Polyolefine oder aus einer Polyvinylverbindung gebildet sein.

Der äußere Dichtungskörper 4 wird mit der Lagerbuchse 2 und der innere Dichtungskörper 5 mit dem Gelenkkreuzzapfen 1 jeweils mittels Preßpassung aufgebracht, um auf diese Weise ein Eindringen von Fremdkörpern in den Innenraum der Lagerbuchse zu vermeiden und auch einen Schmiermittelverlust über die Spaltöffnungen im Bereich der Fügestellen auszuschließen. Bei der Herstellung der Dichtungsvorrichtung werden die beiden Dichtungskörper 4 und 5 vor dem Einbau zusammengesetzt. Der äußere Dichtungskörper 4 kann spanend oder spanlos gefertigt und anschließend in eine entsprechende Spritzgußform eingelegt werden, an der zusätzlich die Außenkontur des inneren Dichtungskörpers 5 ausgespart ist. Jetzt kann der innere Dichtungskörper eingespritzt werden, wobei er beim Erkaltungsvorgang etwas schrumpft. Hierdurch entsteht zwischen den Oberflächen der Dichtungslamellen 9 ein Labyrinthspalt, so daß sichergestellt wird, daß die beiden miteinander zusammenwirkenden Dichtungskörper 4 und 5 gegeneinander gedreht werden können. Vorteilhafterweise wird vor dem Einspritzvorgang des inneren Dichtungskörpers 5 Trennmittel auf die Oberfläche des äußeren Dichtungskörpers 4 gebracht, damit die Dichtungslamellen nicht zusammenhaften. Vorteilhaft ist es hierzu, wenn die Dichtungsflächen eine sehr geringe Rauhtiefe aufweisen, um bei einer gegenseitigen Verstellung der Dichtungskörper 4 und 5 die Reibungsverluste klein zu halten.

Die vorteilhafte Ausgestaltung der beiden Dichtungskörper 4, 5 schafft die Möglichkeit, diese bei entsprechender Anpassung jeder beliebigen Oberfläche auf einen Gelenkkreuzzapfen 1 aufzubringen. Um die Querschnittshöhe der Dichtungskörper zu verringern, werden hierzu entsprechend die Dichtungslamellen 9 in ihrer Querschnittshöhe reduziert. Hierdurch erhält man einen Bauraumgewinn. Ferner wird hierdurch die Möglichkeit geschaffen, die Dichtungskörper 4 bzw. 5 stufenförmig ausgebildeten Gelenkkreuzzapfen ohne weiteres anzupassen. Durch die Verringerung des Bauraums wird auch der innenliegende Raum zur Aufnahme der Wälzkörper 3 vergrößert.

In vorteilhafter Weise liegt das Abstützelement 23 mit Vorspannkraft gegen die Oberfläche 41 des Konusteils 30 an. Hierdurch erhält man eine einwandfreie Abdichtung zwischen dem Außen- und dem Innenbereich des Gelenkkreuzzapfens.

Wie aus Fig. 1 hervorgeht, erstrecken sich die Dichtungslamellen 9 vorzugsweise in radialer Richtung, d. h. sie erstrecken sich in etwa parallel zu einer Querebene 31, die eine Mittelachse 11 in einem rechten Winkel schneidet. Zwischen den einander zugewandten Oberflächen der Dichtungslamellen 9 befindet sich ein Luftspalt bzw. Labyrinthspalt 10.

Der Außendurchmesser des äußeren, ringförmig ausgebildeten Dichtungskörpers 4 ist über die gesamte Länge des Dichtungskörpers konstant. Am Ende der Lagerbuchse 2 befindet sich ein Ansatz 6, der sich in einen im zweiten Dichtungskörper 5 vorgesehenen Ringraum 24 erstreckt. Am stirnseitigen Ende der Lagerbuchse 2 ist eine Abstufung bzw. Aussparung 25 mit einer Stirnseite 26 und einer zweiten Stirnseite 26' vorgesehen. In diese Abstufung bzw. Aussparung 25 erstreckt sich ein Umhüllungsteil 7, das fest mit dem inneren, ringförmigen Dichtungskörper 5 verbunden ist. Der Außendurchmesser des Umhüllungsteils 7 entspricht dem Bereich der Stirnseite 26 der Abstufung des Außendurchmessers der Lagerbuchse 2. Der Ansatz 6 der Lagerbuchse 2 bildet also mit der Aussparung 25 in Verbindung mit dem Ringraum 24 des inneren Dichtungskörpers 5 ebenfalls eine Labyrinthdichtung. Die mit Bezug auf die Querebene 31 in etwa parallel verlaufenden Stirnseiten 26, 26' des Ansatzes 6 bilden mit der Aussparung 25 und die ebenfalls auf einer Querebene liegenden Stirnseiten 27 und 27' des Umhüllungsteils 7 mit dem Ringraum 24 je einen Ringspalt 28 bzw. 29.
Die Außenwand des Dichtungskörpers 4 hat in etwa den gleichen Außendurchmesser des unteren Wandteils 43 der Aussparung 37. Der Ansatz 6 liegt gegen den Außenumfang des Dichtungskörpers 5 und bildet somit ebenfalls einen labyrinthartigen Dichtungsspalt 12. Das Umhüllungsteil 7 und die beiden Abstützelemente 22 und 23, die, wie bereits erwähnt, als Dichtungskörper 5 fungieren, bilden einen einteiligen Dichtungskörper, der auf das Konusteil 30 aufgepresst ist. Der Ansatz 39 des äußeren Dichtungskörpers 4 liegt mit seiner innenliegenden Stirnseite gegen das stirnseitige Ende des inneren Dichtungskörpers 5 an und presst in der Stellung gemäß Fig. 3 den Dichtungskörper 4 gegen die Schulter 16. Damit ist auch die Axialbewegung des Gelenkkreuzzapfens 1 in Richtung des Bodens 8 der Lagerbuchse 2 begrenzt. Die axiale Fixierung des Gelenkkreuzzapfens 1 erfolgt auch durch die Anlage der innenliegenden Stirnfläche des Gelenkbolzens 1 gegen die Stirnfläche 17 des Bodens 8.

### Bezugszeichenliste

- 1: Gelenkkreuzzapfen
- 2: Lagerbuchse
- 3: Wälzkörper
- 4: Dichtungskörper, äußerer
- 5: Dichtungskörper, innerer
- 6: Ansatz
- 7: Umhüllungsteil
- 8: Boden
- 9: Dichtungslamelle, Dichtungselement
- 10: Labyrinthspalt
- 11: Mittelachse
- 12: Dichtungsspalt
- 13: Dichtlippe
- 14: Bereich des Konusübergangs
- 15: Kammer, Aussparung
- 16: Schulter
- 17: Stirnfläche
- 18: Lamellenteilkreis
- 19: Wälzkörper-Lauffläche
- 20: Nase
- 21 22: Abstützelement
- 23: Abstützelement
- 24: Ringraum
- 25: Aussparung, Abstufung
- 26: Stirnseite
- 26: Stirnseiten
- 27: Stirnseite
- 27': Stirnseite
- 28: Ringspalt
- 29: Ringspalt
- 30: Konusteil
- 31: Querebene
- 32: Stirnfläche
- 33: Gelenkgabel
- 34: Gelenkgabel
- 35: Gelenkzapfenteil
- 36: Gehäuseteil
- 37: ringförmige Aussparung
- 38: Stirnfläche
- 39: Ansatz
- 40: Ausdrehung
- 41: Oberfläche
- 42: Stirnseite
- 43: Wandteil

## Patentansprüche

1. Abdichtung für einen in einer Lagerbuchse (2) aufgenommenen Gelenkkreuzzapfen (1) für eine Gelenkkreuzwelle mit einem äußeren und einem inneren, ringförmigen, in die Lagerbuchse (2) einsetzbaren, eine gegenseitige Verstellung zulassenden Dichtungskörper (4, 5), die miteinander in Wirkverbindung stehen,
**dadurch gekennzeichnet, dass**
a) beide in radialer Richtung gegenüberliegende Dichtungskörper (4, 5) labyrinthartig angeordnete, formschlüssig ineinandergreifende Dichtungslamellen (9) aufweisen, die sich in etwa in Richtung oder parallel zu einer rechtwinklig zur Mittelachse (11) des Gelenkkreuzzapfens (1) angeordneten Querebene (31) erstrecken und eine Labyrinthdichtung bilden und
b) zumindest einer der Dichtungskörper (5) ein Umhüllungsteil (7) aufweist, das den anderen Dichtungskörper (4) und/oder die Lagerbuchse (2) zumindest teilweise überlappt**.**

2. Abdichtung nach Anspruch 1, **dadurch gekennzeichnet, dass** der äußere Dichtungskörper (4) mit der Lagerbuchse (2) und der innere Dichtungskörper (5) mit dem Gelenkkreuzzapfen (1) jeweils mit Hilfe einer Presspassung verbunden sind.

3. Abdichtung nach Anspruch 1 oder 2, **dadurch gekennzeichnet, dass** die Dichtungskörper (4, 5) ein oder mehrere Abstützelemente (22, 23) aufweisen, wobei zumindest ein Abstützelement (22) als Dichtlippe ausgebildet ist und auf dem Konusteil (30) oder im Bereich eines Konusübergangs (14) auf dem Gelenkkreuzzapfen (1) mit Vorspannung abstützbar ist.

4. Abdichtung nach **Anspruch 3, dadurch gekennzeichnet, dass** die beiden Abstützelemente (22, 23) mit Abstand zueinander angeordnet sind und das zweite Abstützelement (23) auf einer an den Konusübergang (14) anschließenden, geneigt verlaufenden Konusfläche abstützbar ist.

5. Abdichtung nach einem der Ansprüche **3 und 4, dadurch gekennzeichnet, dass** zwischen den beiden Abstützelementen (22, 23) eine zur Oberfläche des Gelenkkreuzzapfens (1) gerichtete Kammer bzw. Aussparung (15) gebildet ist.

6. Abdichtung nach einem der Ansprüche 1 bis 5, **dadurch gekennzeichnet, dass** das auf dem inneren Dichtungskörper (5) angeordnete Umhüllungsteil (7) einen koaxial zu einer Mittelachse (11) verlaufenden Ringraum (24) aufweist, der zur Aufnahme eines an der Lagerbuchse (2) angeordneten, ringförmigen Ansatzes (6) dient.

7. Lagerbuchse mit einer Abdichtung nach Anspruch 6, **dadurch gekennzeichnet, dass** der Ansatz (6) eine im Querschnitt rechteckförmige Aussparung (25) aufweist, in die der äußere Teil des Umhüllungsteils (7) einbringbar ist und der Ansatz (6) und die Aussparung (25) mit dem Ringraum (24) eine Labyrinthdichtung bilden.

8. Lagerbuchse nach Anspruch 7 **dadurch gekennzeichnet, dass** mit Bezug auf die Querebene (31) in etwa parallel verlaufende Stirnseiten (26, 26') des Ansatzes (6) und der Aussparung (25) mit ebenfalls auf einer Querebene liegenden Stirnseiten (27, 27') des Umhüllungsteils (7) des Ringraums (24) je einen Ringspalt (28, 29) bilden.

9. Abdichtung nach einem der Ansprüche 3 bis 6, **dadurch gekennzeichnet, dass** das Umhüllungsteil (7) und die beiden Abstützelemente (22, 23) den einteiligen Dichtungskörper (5) bilden, der aus einem elastomeren Werkstoff besteht und zumindest auf den Gelenkkreuzzapfen (1) und/oder auf ein Konusteil (30) aufgepresst ist.

10. Verfahren zur Herstellung einer Abdichtung nach Anspruch 1, **dadurch gekennzeichnet, dass**
a) der äußere Dichtungskörper (4) mit radial nach innen gerichteten Dichtungslamellen (9) spanend oder spanlos hergestellt und anschließend in eine Spritzgussform eingelegt wird, an der zusätzlich die Kontur des inneren Dichtungskörpers (5) ausgespart ist;
b) vor dem Einspritzen des inneren Dichtungskörpers (5) ein Trennmittel auf den äußeren Dichtungskörper (4) aufgebracht wird welches das Zusammenhaften der beiden Dichtungskörper (4, 5) verhindert;
c) der innere Dichtungskörper (5) in die Kontur und zwischen die Dichtungslamellen (9) des äußeren Dichtungskörpers (4) eingespritzt wird;
d) der innere Dichtungskörper (5) beim Erkaltungsvorgang etwas schrumpft, wodurch ein Labyrinthspalt zwischen den beiden Dichtungskörpern (4, 5) gebildet wird.

## Claims

1. Seal for a spider trunnion (1) for a spider shaft, said trunnion (1) being received in a bearing bushing (2), said seal having an outer and an inner annular seal body (4, 5), wherein the two bodies (4, 5) interact, can be inserted in the bearing bushing (2), and permit mutual displacement,
**characterized in that**
a) both radially opposing seal bodies (4, 5) comprise sealing lamellas (9) that are arranged like a labyrinth, engage each other with positive fit, extend approximately towards or parallel to a transverse plane (31) arranged at right angles to the center line (11) of the spider trunnion (1), and form a labyrinth seal; and
b) at least one seal body (5) comprises a sheath part (7) that at least partially overlaps the other seal body (4) and/or the bearing bushing (2).

2. Seal according to claim 1, **characterized in that** the connection of the outer seal body (4) to the bearing bushing (2) as well as of the inner seal body (5) to the spider trunnion (1) is provided by way of interference fit.

3. Seal according to claim 1 or 2, **characterized in that** the seal bodies (4, 5) comprise one or more supporting elements (22, 23), wherein at least one supporting element (22) is formed as a sealing lip and can be supported with prestress against the cone part (30) or against the spider trunnion (1) in the area of a cone transition portion (14).

4. Seal according to claim 3, **characterized in that** the two supporting elements (22, 23) are spaced apart and that the second supporting element (23) can be supported against a slanting cone surface that is arranged adjacent to the cone transition portion (14).

5. Seal according to any one of claims 3 and 4, **characterized in that** a chamber or recess (15) is formed between the two supporting elements (22, 23), said chamber or recess (15) being directed towards the surface of the spider trunnion (1).

6. Seal according to any one of claims 1 to 5, **characterized in that** the sheath part (7) arranged on the inner seal body (5) comprises an annular space (24) extending coaxially to a center line (11), said annular space (24) serving to receive an annular extension piece (6) that is arranged at the bearing bushing (2).

7. Bearing bushing with a seal according to claim 6, **characterized in that** the extension piece (6) comprises a recess (25) of rectangular cross-section for receiving the outer part of the sheath part (7) and that the extension piece (6) and the recess (25) form a labyrinth seal together with the annular space (24).

8. Bearing bushing according to claim 7, **characterized in that** front sides (26, 26') of the extension piece (6) and of the recess (25) extending approximately parallel to the transverse plane (31) form one annular gap (28, 29) each together with front sides (27, 27') of the sheath part (7) of the annular space (24) that also lie in a transverse plane.

9. Seal according to any one of claims 3 to 6, **characterized in that** the sheath part (7) and the two supporting elements (22, 23) form the one-piece seal body (5) that consists of an elastomer and is pressed at least onto the spider trunnion (1) and/or a cone part (30).

10. Method for manufacturing a seal according to claim 1,
**characterized in that**
a) the outer seal body (4) with radially inwardly directed sealing lamellas (9) is manufactured by material removal or by forming and then placed in an injection mould that also comprises a recess for the contour of the inner seal body (5);
b) a release agent is deposited on the outer seal body (4) prior to injecting the inner seal body (5) for preventing the two seal bodies (4, 5) from sticking to each other;
c) the inner seal body (5) is injected into the contour and between the sealing lamellas (9) of the outer seal body (4);
d) the inner seal body (5) slightly shrinks during cooling down, thereby forming a labyrinth gap between the two seal bodies (4, 5).

## Revendications

1. Joint pour un pivot de croisillon (1) logé dans un coussinet de palier (2) pour un arbre à croisillon avec un corps de joint extérieur et un corps de joint intérieur (4, 5) annulaires logeables dans le coussinet de palier (2), admettant un ajustement réciproque, lesquels sont en rapport d'action conjointe,
**caractérisé en ce que**
a) les deux corps de joint (4, 5) opposés en direction radiale présentent des lamelles d'étanchéité (9) disposées en labyrinthe et s'engageant positivement les unes dans les autres, lesquelles s'étendent approximativement dans le sens d'un plan transversal (31) perpendiculaire à l'axe médian (11) du pivot de croisillon (1) ou parallèlement à celui-ci et forment un joint labyrinthe, et
b) **en ce qu'**au moins un des corps de joint (5) présente une pièce enveloppante (7) chevauchant au moins partiellement l'autre corps de joint (4) et/ou le coussinet de palier (2).

2. Joint selon la revendication 1, **caractérisé en ce que** le corps de joint extérieur (4) est relié au coussinet de palier (2) et le corps de joint intérieur (5) au pivot de croisillon (1) au moyen d'un ajustage serré chacun.

3. Joint selon la revendication 1 ou 2, **caractérisé en ce que** les corps de joint (4, 5) présentent un ou plusieurs éléments d'appui (22, 23), un élément d'appui (22) au moins étant formé comme lèvre d'étanchéité et pouvant prendre appui sur la pièce conique (30) ou dans la région d'un passage conique (14) sur le pivot de croisillon (1) en étant préalablement tendu.

4. Joint selon la revendication 3, **caractérisé en ce que** les deux éléments d'appui (22, 23) sont disposés à intervalle l'un de l'autre et le deuxième élément d'appui (23) peut prendre appui sur une surface conique inclinée adjacente au passage conique (14).

5. Joint selon l'une des revendications 3 et 4, **caractérisé en ce qu'**un compartiment ou un évidement (15) orienté vers la surface du pivot de croisillon (1) est formé entre les deux éléments d'appui (22, 23).

6. Joint selon l'une des revendications 1 à 5, **caractérisé en ce que** la pièce enveloppante (7) disposée sur le corps de joint intérieur (5) présente un espace annulaire (24) s'étendant co-axialement à un axe médian (11), prévu pour le logement d'une saillie (6) annulaire disposée sur le coussinet de palier (2).

7. Coussinet de palier avec un joint selon la revendication 6, **caractérisé en ce que** la saillie (6) présente un évidement (25) de section rectangulaire, où la partie extérieure de la pièce enveloppante (7) peut être engagée, et **en ce que** la saillie (6) et l'évidement (25) forment un joint labyrinthe avec l'espace annulaire (24).

8. Coussinet de palier selon la revendication 7, **caractérisé en ce que** des faces frontales (26, 26') de la saillie (6) et de l'évidement (25) s'étendant à peu près parallèlement par rapport au plan transversal (31) forment chacune un passage annulaire (28, 29) avec des faces frontales (27, 27') de la pièce enveloppante (7) également situées sur un plan transversal.

9. Joint selon l'une des revendications 3 à 6, **caractérisé en ce que** la pièce enveloppante (7) et les deux éléments d'appui (22, 23) forment le corps de joint unitaire (5), composé d'un matériau élastomère et comprimé au moins sur le pivot de croisillon (1) et/ou une pièce conique (30).

10. Procédé pour la fabrication d'un joint selon la revendication 1 **caractérisé en ce que**
a) le corps de joint extérieur (4) avec des lamelles d'étanchéité (9) orientées radialement vers l'intérieur est fabriqué avec ou sans enlèvement de copeaux et ensuite déposé dans un moule à injection, sur lequel le contour du corps de joint intérieur (5) est complémentairement réservé ;
b) un agent anti-adhésif est appliqué sur le corps de joint extérieur (4) avant l'injection du corps de joint intérieur (5) pour empêcher l'adhérence des deux corps de joint (4, 5) entre eux ;
c) le corps de joint intérieur (5) est injecté dans le contour et entre les lamelles d'étanchéité (9) du corps de joint extérieur (4) ;
d) le corps de joint intérieur (5) se rétracte quelque peu lors du refroidissement, ce par quoi un passage labyrinthe est formé entre les deux corps de joint (4, 5).
